(19) **Europäisches Patentamt**

**European Patent Office**

**Office européen des brevets**

(11) Veröffentlichungsnummer: **0 322 530 B1**

(12) **EUROPÄISCHE PATENTSCHRIFT**

(45) Veröffentlichungstag der Patentschrift: **09.09.92**

(21) Anmeldenummer: **88117472.6**

(22) Anmeldetag: **20.10.88**

(51) Int. Cl.5: **F16D 55/02**, F16D 65/84

(30) Priorität: **19.12.87 DE 3743291**

(43) Veröffentlichungstag der Anmeldung:
**05.07.89 Patentblatt 89/27**

(45) Bekanntmachung des Hinweises auf die
Patenterteilung:
**09.09.92 Patentblatt 92/37**

(84) Benannte Vertragsstaaten:
**DE ES FR GB IT NL**

(56) Entgegenhaltungen:
EP-A- 0 129 095    EP-A- 0 178 449
DE-U- 8 700 102    FR-A- 1 487 551
GB-A- 2 018 373    GB-A- 2 129 511
US-A- 3 730 302

(54) **Bremsvorrichtung.**

(73) Patentinhaber: **Dr.Ing.h.c. F. Porsche Aktiengesellschaft
Porschestrasse 42
W-7000 Stuttgart 40(DE)**

(72) Erfinder: **Aydt, Günter, Dipl.-Ing.
Sechselberger Weg 3
W-7150 Backnang(DE)**
Erfinder: **Martin, Roland, Dipl.-Ing.
Bahnhofstrasse 33
W-7251 Weissach(DE)**
Erfinder: **Kroniger, Wilhelm, Dipl.-Ing.
Am Geissberg 20
W-7251 Friolzheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Bremsvorrichtung nach dem Oberbegriff des Anspruchs 1.

Aus der GB-A-2 018 373 sind in einer Bohrung eines Betätigungskolbens über Halteklammern festgesetzte tellerförmige Zwischenlagen für jeweils einen Kolben bekannt, die gerade die Kolbenstirnfläche überdecken und ein durch die Bremsbacken hervorgerufenes Quietschen unterdrücken sollen. Zum sicheren Festsetzen dieser Zwischenlage im Kolben ist diese mit zusätzlichen Anschlagelementen versehen, die einem radialen Versetzen der Zwischenlage in der Bohrung beim Bremsen entgegenwirken sollen.

Des weiteren ist aus der EP-A-129 095 eine Bremsvorrichtung bekannt, die zwischen den Betätigungskolben der Bremse und der Bremsbacke eine Platte zum Schützen der Kolben gegen eine Hitzeeinwirkung aufweist. Diese Platte ist in bzw. auf den Betätigungskolben über Klammer gehalten, wobei ein zusätzlicher Quersteg in der Platte diese genau zu den Kolben festlegt und somit Toleranzen nicht ausgleichbar sind und in nachteiliger Weise radiale Kräfte auf die Kolben ausgeübt werden.

Aufgabe der Erfindung ist es, für eine Scheibenbremse eine Zwischenlage zu schaffen, die Quietschgeräusche im Betrieb vermeidend klemmend im Betätigungskolben gehalten und Abstandstoleranzen der Kolben ausgleichend angeordnet ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die plattenförmige Zwischenlage, insbesondere bei einer Vier-Kolben-Festsattelbremse, Bewegungen der Bremsbacke und hieraus resultierende Schwingbewegungen des Bremssattels reduziert und das Geräuschverhalten verbessert. Durch die Befestigung der Zwischenlage über Halteklammern in den beiden Betätigungskolben ist die Zwischenlage klemmend gehalten. Die Halteklammern in den Bohrungen der Kolben sind in der Weise vorgesehen, daß Fertigungstoleranzen in bezug auf den Abstand der Kolben zueinander auszugleichen sind, ohne daß von der Zwischenlage eine Radialkraft auf die Betätigungskolben ausgeübt wird und ein axiales Bewegen dieser Kolben durch erhöhte Reibung behindert werden kann.

Ein Ausführungsbeispiel der Erfindung ist in der Zeichnung dargestellt und wird im folgenden näher beschrieben.

Es zeigen:

Fig. 1  eine Ansicht auf eine im Kolben einer Vier-Kolben-Festsattelbremse gehaltene plattenförmige Zwischenlage mit Halteklammern und

Fig. 2  einen Schnitt durch einen Betätigungskolben mit einer plattenförmigen Zwischenlage und Halteklammern.

Die plattenförmige Zwischenplatte 1 ist auf der der Bremsbacke 2 zugerichteten Fläche mit einer reibungserhöhenden Schicht 3 z. B. einer gummiartigen Schicht versehen, die sich beim Bremsen gegen die Rückseite der Bremsbacke anlegt, die ebenfalls mit einer reibungserhöhenden Schicht versehen sein kann. Zum Festsetzen der Zwischenlage 1 in den beiden nebeneinander im Bremssattel gehaltenen Betätigungskolben 4, 5 einer Vier-Kolben-Festsattelbremse, sind mehrere Halteklammer 6, 7, 8,9 und 10 vorgesehen. Diese erstrecken sich axial von der Zwischenlage 1 und drücken aufgrund ihrer Vorspannung gegen die Innenflächen der Bohrungen 11 und 12 der Betätigungskolben 4 und 5.

Die Klammern 6 bis 10 können einstückig mit der Zwischenlage 1 ausgebildet sein oder auch aus separaten Teilen bestehen, die dann mit der Zwischenlage 1 durch Nieten, Schrauben, Kleben oder dergleichen verbunden sind.

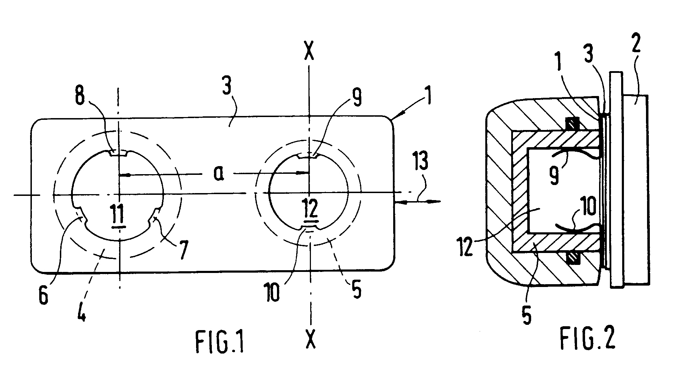

Wie in Fig. 1 gezeigt, ist die Zwischenlage 1 mit dem Kolben 4 über drei Halteklammern 6, 7 und 8 und mit dem Kolben 5 über zwei Halteklammern 9 und 10 verbunden. Die Halteklammern 6, 7 und 8 sind vorzugsweise mit einem gleichen Abstand über den Umfang der Bohrung 11 verteilt angeordnet, wobei statt dieser drei Klammern auch mehr als drei Klammern vorgesehen sein können.

Die beiden Klammer 9 und 10 der Zwischenlage 1, die in die Bohrung 12 des Kolbens 5 hineinragen, sind gegenüberliegend in einer senkrechten Ebene X-X angeordnet.

Es kann statt der gezeigten Anordnung mit drei Klammern 6, 7 und 8 in der Bohrung 11 des Kolbens 4 und mit zwei Klammern 9 und 10 im Kolben 5 auch eine Anordnung derart vorliegen, daß die Zwischenlage 1 über zwei Klammern in dem Kolben 4 und über drei Klammern in dem Kolben 5 gehalten wird.

Durch die Halteklammern 6 bis 10 wird die Zwischenlage 1 sicher zu den Kolben 4 und 5 gehalten und sie erfährt aufgrund der drei Klammern 6 bis 8 im Zusammenspiel mit den zwei Klammern 9 und 10 in Pfeilrichtung 13 keine wesentliche Verschiebung, so daß eine Bewegung der Bremsbacke 3 im Betrieb gehemmt wird.

Durch die spezielle Anordnung und Anzahl der Klammern werden Fertigungstoleranzen in bezug auf den Abstand a der Betätigungskolben 4, 5 zueinander ausgeglichen. Es kann somit über die plattenförmige Zwischenlage 1 keine radiale Kraft auf die Betätigungskolben 4, 5 ausgeübt werden und eine Axialbewegung der Kolben 4, 5 wird somit nicht behindert.

**Patentansprüche**

1. Bremsvorrichtung, insbesondere Scheibenbremse für Fahrzeuge, mit in einem Bremssattel zu beiden Seiten einer Bremsscheibe geführten Bremsbacken (2), die mit hydraulisch beaufschlagbaren Betätigungskolben (4, 5) in Verbindung stehen, wobei jeder Betätigungskolben (4, 5) eine der Bremsbacke (2) zugerichtete Bohrung (11, 12) aufweist, in der eine die Kolbenstirnfläche überdeckende plattenförmige Zwischenlage (1) durch Halteklammern (6 bis 10) festgesetzt ist, dadurch gekennzeichnet, daß die Zwischenlage (1) eine der Rückfläche der Bremsbacke (2) gegenüberstehende reibungserhöhende Schicht (3) aufweist und in Bohrungen (11, 12) von nebeneinander angeordneten Betätigungskolben (4, 5) über rastend eingreifende Halteklammern (6 bis 10) festsetzbar ist.

2. Bremsvorrichtung nach Anspruch 1, dadurch gekennzeichnet, daß die Zwischenlage (1) in einer Bohrung (11) eines ersten Betätigungskolbens (4) über mindestens drei Halteklammer (6 bis 8) und in einer Bohrung (12) eines benachbarten zweiten Betätigungskolbens (5) über zwei Halteklammern (9, 10) festgesetzt ist.

3. Bremsvorrichtung nach Anspruch 2, dadurch gekennzeichnet, daß die drei Halteklammern (6 bis 8) über den Umfang der Bohrung (11) des Betätigungskolbens (4) mit einem gleichen Abstand zueinander angeordnet sind.

4. Bremsvorrichtung nach den Ansprüchen 2 oder 3, dadurch gekennzeichnet, daß die beiden Halteklammern (9 und 10) in der Bohrung (12) des Kolbens (5) in einer vertikalen Ebene (X-X) gegenüberstehend angeordnet sind.

5. Bremsvorrichtung nach einem oder mehreren der vorhergehenden Ansprüche dadurch gekennzeichnet, daß die Klammern (6 bis 10) mit der plattenförmigen Zwischenlage (1) einstückig ausgebildet sind.

6. Bremsvorrichtung nach einem oder mehreren der vorhergehenden Ansprüche, dadurch gekennzeichnet, daß die Klammern (6 bis 10) mit der plattenförmigen Zwischenlage (1) über Befestigungselemente verbunden sind.

**Claims**

1. A brake device, in particular a disc brake for vehicles, having brake pads (2) guided in a caliper on both sides of a brake disc and connected to actuating pistons (4, 5) capable of being acted upon hydraulically, each actuating piston (4, 5) having a bore (11, 12) which faces the brake pad (2) and in which a plate-shaped intermediate layer (1) covering the end face of the pistons is secured by holding clips (6 to 10), characterized in that the intermediate layer (1) has a friction-enhancing layer (3) opposite the rear face of the brake pad (2) and can be secured in bores (11, 12) of actuating pistons (4, 5) arranged adjacent to each other by way of holding clips (6 to 10) engaging as catches.

2. A brake device according to Claim 1, characterized in that the intermediate layer (1) is secured in a bore (11) of a first actuating piston (4) by way of at least three holding clips (6 to 8) and in a bore (12) of an adjacent second actuating piston (5) by way of two holding clips (9, 10).

3. A brake device according to Claim 2, characterized in that the three holding clips (6 to 8) are arranged at an equal distance from one another around the periphery of the bore (11) of the actuating piston (4).

4. A brake device according to Claim 2 or 3, characterized in that the holding clips (9 and 10) are arranged opposite each other in a vertical plane (X-X) in the bore (12) of the piston (5).

5. A brake device according to one or more of the preceding Claims, characterized in that the clips (6 to 10) are constructed integrally with the plate-shaped intermediate layer (1).

6. A brake device according to one or more of the preceding Claims, characterized in that the clips (6 to 10) are connected to the plate-shaped intermediate layer (1) by way of fastening members.

**Revendications**

1. Dispositif de freinage, en particulier frein à disque pour véhicule automobile, comportant des mâchoires de freinage (2), guidées dans un étrier, de part et d'autre d'un disque de frein, et qui sont en liaison avec des pistons d'actionnement (4, 5) sollicités hydrauliquement, chaque piston d'actionnement (4, 5) comportant un alésage (11, 12) dirigé vers la mâchoire de frein (2), alésage dans lequel une garniture intermédiaire (1) en forme de plaque, recouvrant la face frontale du piston, est fixée par des agrafes (6 à 10), caractérisé en ce que la garniture intermédiaire (1) comporte une couche (3) augmentant la friction, faisant face à la surface arrière de la mâchoire de frein (2), et peut être fixée dans des alésages (11, 12) de pistons d'actionnement (4, 5) juxtaposés, par des agrafes (6 à 10) s'engageant à l'intérieur par clipsage.

2.  Dispositif de freinage selon la revendication 1, caractérisé en ce que la garniture intermédiaire (1) est fixée dans un alésage (11) d'un premier piston d'actionnement (4), par au moins trois agrafes (6 à 8) et dans un alésage (12) d'un second piston d'actionnement (5) voisin, par deux agrafes (9, 10).

3.  Dispositif de freinage selon la revendication 2, caractérisé en ce que les trois agrafes (6 à 8) sont espacées d'une même distance les unes par rapport aux autres, sur le pourtour de l'alésage (11) du piston d'actionnement (4).

4.  Dispositif de freinage selon les revendications 2 ou 3, caractérisé en ce que les deux agrafes (9 et 10) sont placées dans l'alésage (12) du piston (5), de manière à se faire face l'une l'autre dans un plan vertical (X-X).

5.  Dispositif de freinage selon une ou plusieurs des revendications précédentes, caractérisé en ce que les agrafes (6 à 10) sont réalisées d'une seule pièce avec la garniture intermédiaire (1) en forme de plaque.

6.  Dispositif de freinage selon une ou plusieurs des revendications précédentes, caractérisé en ce que les agrafes (6 à 10) sont assemblées à la garniture intermédiaire (1) en forme de plaque, par des éléments de fixation.

FIG.1

FIG.2